# EUROPEAN PATENT APPLICATION

(11) **EP 4 722 087 A1**
(43) Date of publication of application: **08.04.2026**
(21) Application number: 24383066.8
(22) Date of filing: 02.10.2024
(51) Int. Cl.: B62J 9/30

(54) **LOCKING AND FASTENING DEVICE FOR A MOTORCYCLE CASE AND MOTORCYCLE CASE INCLUDING SAID LOCKING AND FASTENING DEVICE**

(71) Applicant: NAD, S.L., 08100 Mollet del Vallès (ES)
(72) Inventor: AYALA GONZALEZ, Pedro, 08100 Mollet del Vallés (ES); XICOLA SERRANO, Jaume, 08100 Mollet del Vallés (ES)
(74) Representative: Ponti & Partners, S.L.P

(57) **Abstract**

Locking and fastening device (1) for motorcycle cases, comprising a lid closing and opening mechanism for closing and opening a lid of the motorcycle case, a fastening mechanism for removably fasten the motorcycle case to a motorcycle chassis, and locking means for locking said lid closing and opening mechanism and said fastening mechanism, wherein the locking means comprise at least one latch (31, 32), a cam follower mechanism including a cam element (2) and a follower element (3), wherein said cam element (2) is mechanically linked to a lock (5) and arranged and configured to convert rotary motion of the lock (5) into reciprocating linear motion of the follower element (3), and wherein said follower element (3) is operationally connected to said at least one latch (31, 32).

## Description

The present invention relates to a device comprising a mechanism intended for the locking and the removable fastening of suitcases on motorcycles and similar vehicles. The present invention also relates to a motorcycle case comprising said device.

### State of the art

Many different suitcases have been developed and introduced in the market for all ranges of motorcycles. Some of them allow both the closing/opening of the lid of motorcycle suitcase, and the coupling/releasing of such suitcases with respect to a support structure solidly fixed to the motorcycle.

Recent solutions allow the coupling/releasing of such suitcase from the top of the support structure, known as top suitcase systems, providing a higher level of simplicity and efficiency. In the latter systems, coupling of the suitcase to the support structure is managed by a fastening mechanism which maintains the suitcase fixed to the support structure with the help of specific elastic means.

For example, the patent document EP1210260A1 discloses a locking and fastening device for top suitcases, comprising a lid closing and opening mechanism for closing and opening the lid of the motorcycle case, a fastening mechanism for removably fasten the motorcycle case to a motorcycle chassis, and locking means for locking said lid closing and opening mechanism and said fastening mechanism. In EP1210260A1, two pivotable levers are associated with a lock which, in a neutral position, opens the lid of the suitcase while keeps it fixed to the support structure and, in an alternative position, it releases the motorcycle case from the motorcycle chassis. Similar mechanisms are proposed at EP3668781B1, EP0517265, EP3016844B1, ES2126438B1 and ES2027155A6.

Nevertheless, in the cited prior art, the advantage of opening the lid and releasing the suitcase by means of the same lock is associated with a certain complexity and volume of the mechanisms, which may not be recessed at the suitcase front. Therefore, a locking and fastening device that is cost-effective and small in size is desired.

### Description of the invention

The object of the present invention is to provide a locking and fastening device for a motorcycle case that solves the aforementioned drawbacks with the advantages that will be described below.

According to a first aspect, the present invention provides a locking and fastening device for motorcycle cases comprising a lid closing and opening mechanism for closing and opening a lid of the motorcycle case, a fastening mechanism for removably fasten the motorcycle case to a motorcycle chassis, and locking means for locking said lid closing and opening mechanism and said fastening mechanism.

Unlike the locking and fastening devices known in the state of the art, the locking and fastening device proposed by this invention is characterized in that said locking means comprise:
- at least one latch linked to said lid closing and opening mechanism and said fastening mechanism, for example one latch linked to both said closing and opening mechanism an said fastening mechanism or two latches linked respectively to said lid closing and opening mechanism and said fastening mechanism,
- a cam follower mechanism including a cam element and a follower element,
- wherein said cam element is mechanically linked to a lock and arranged and configured to convert rotary motion of the lock into reciprocating linear motion of the follower element, and
- wherein said follower element is operationally connected to said at least one latch to allow both said lid closing and opening mechanism and said fastening mechanism to be locked and unlocked upon actuation of the cam follower mechanism by the lock.

The claimed device makes it possible to operate, preferably simultaneously, on the lid opening and closing mechanism to open/close a top suitcase and on the fastening mechanism to couple/release the top suitcase to/from the motorcycle with a high degree of simplicity and downsizing.

The advantage of the proposed device is that it is simpler to manufacture, it may be integrated into the front of the suitcase, and it may be used in combination with a system that fastens the suitcase to the motorcycle by a pressure lever, which has less vibration when the motorcycle is moving.

In a first embodiment, the follower element comprises a sliding piece vertically displaceable, wherein said sliding piece is provided with a housing configured and arranged to accommodate the cam element such that an inner contour of said housing is in contact with the cam element to be able to convert a reversible rotation of the cam element into a reversible vertical displacement of the sliding piece.

Thanks to these features, the rotational movement of the lock is easily transformed in a reversible vertical displacement of the sliding piece.

Preferably, the follower element comprises at least one upper latch linked to the lid closing and opening mechanism, and at least one lower latch linked to the fastening mechanism, wherein said at least one upper latch and said at least one lower latch are configured to allow respectively said lid closing and opening mechanism and said fastening mechanism to be locked and unlocked upon reversible rotation of the cam follower mechanism by the lock. Advantageously, the upper end of the sliding piece comprises said at least one upper latch and the lower end of the sliding piece comprises or constitutes said at least one lower latch.

For an embodiment, the cam element is integrally attached to the lock, so the axial rotation of the cam element coincides with the lock axial rotation.

According to an embodiment, the follower element is mounted vertically displaceable on a cover set, the cover set being configured to be removably attached to a front face or side of the motorcycle case. For an implementation of this embodiment, the cover set comprises:
- a first cover configured to be removably attached to a part of the motorcycle case,
- a second cover articulately attached to the first cover and configured to be removably attached to the lid, and
- a third cover articulately attached to the second cover and configured to retain the second cover attached to the lid in a retracted third cover position,
- wherein the at least one latch is linked to said third cover to be able to retain said third cover in the retracted position.

According to a preferred implementation, the third cover is provided with at least one hole arranged to receive the at least one upper latch when the third cover is in a retracted position, so that the third cover is susceptible to be retained by said at least one upper latch to lock the lid opening and closing mechanism upon rotation of the cam follower mechanism by the lock.

Advantageously, according to an example;
- said at least one upper latch is hook-shaped,
- the third cover is configured to rotate and remove said at least one hole reversibly between an extended position of the third cover, in which said at least one upper latch is not insertable in said at least one hole, and a retracted position of the third cover, in which said at least one upper latch is insertable in said at least one hole, and
- the follower element is configured to:
   - move upwardly when opening the lock, so the at least one upper latch is extracted from said at least one hole, and
   - move downwardly when closing the lock, so the at least one upper latch is inserted into said at least one hole when the third cover is placed at the retracted position.

According to an embodiment, the fastening mechanism comprises at least one locking plate provided with at least one upper flange configured to be retained by said at least one lower latch when the follower element is moved downwardly.

Thanks to these features, coupling of the suitcase to the motorcycle is easily managed when specific well known coupling elastic means are disposed at a support structure solidly fixed to the motorcycle.

According to a second aspect, the present invention provides a motorcycle suitcase comprising a locking and fastening device according to any of the preceding embodiments, the motorcycle suitcase preferably comprising a rigid case and a lid hinged together.

According to a preferred implementation, the motorcycle suitcase comprises a recess configured to at least partially house said locking and fastening device.

Advantageously, said recess is configured so that at least said first cover, preferably also the second cover, is arranged flush with the front surface of the motorcycle.

### Brief description of the drawings

For the better understanding of the description made herein, a set of drawings has been provided wherein, solely by way of a non-limiting example, an embodiment of the locking and fastening device and a motorcycle suitcase of the invention are represented.

In these drawings:
- FIG. 1 shows an exploded view of an example embodiment of the present locking and fastening device.
- FIG. 2 shows the rear view of the first cover and the follower element and the cam element included in the example embodiment of Fig. 1. Rear view a) shows an unlocked position of the locking and fastening device wherein the follower element and the cam element are in a first vertical upper position, and rear view b) shows a locked position of the locking and fastening device wherein the cam follower mechanism is in a second vertical lower position.
- FIG. 3 shows a rear perspective of the embodiment of figure 1 showing the follower element and the cam element in the first vertical upper position, wherein the lid closing and opening mechanism and the fastening mechanism may be released.
- FIG. 4 shows a front perspective of the embodiment of figure 1 showing an open position of the lock and the third cover in the extended position.
- FIG. 5 shows a front perspective of the embodiment of figure 1 showing a closed position of the lock and the third cover in the retracted position.
- FIG.6 shows a rear perspective of the embodiment of figure 1 showing the follower element and the cam element in the second vertical lower position, wherein the lid closing and opening mechanism and the fastening mechanism are locked.
- FIG. 7 shows a front view of the embodiment of figure 1 showing a closed position of the lock and the third cover in the retracted position.
- FIG. 8 shows a section view through the VIII-VIII dashed line indicated at Fig. 7, wherein the upper latches are introduced in the holes of the third cover and the lower latch is blocking the locking plate of the fastening mechanism.
- FIG. 9 shows a section view in the same plane as Fig. 8, wherein the follower element is placed at the first vertical upper position, so the upper latches are pulled out from the holes of the third cover and the lower latch is pulled out from the locking plate.
- FIG. 10 shows a section view in the same plane as Fig. 8 and 9, wherein the third cover is rotated, and its holes are moved away from the upper latches.
- FIG. 11 shows a perspective view of an example embodiment of the present motorcycle suitcase, wherein the locking and fastening device has been moved apart from the rigid case and the lid.
- FIG. 12 shows a front view of said motorcycle suitcase, wherein the locking and fastening device is in a locked position.
- FIG. 13 shows a section view through the XIII-XIII dashed line indicated at Fig. 12, wherein it may be seen a lateral hook of the second cover of the locking and fastening device is hooked to a crossbar of the lid.
- FIG. 14 shows a section view in the same plane as Fig. 13, wherein the second cover of the locking and fastening device has been lifted, so the lateral hooks are not hooked to the crossbars and therefore the lid may be opened.

### Description of preferred embodiments

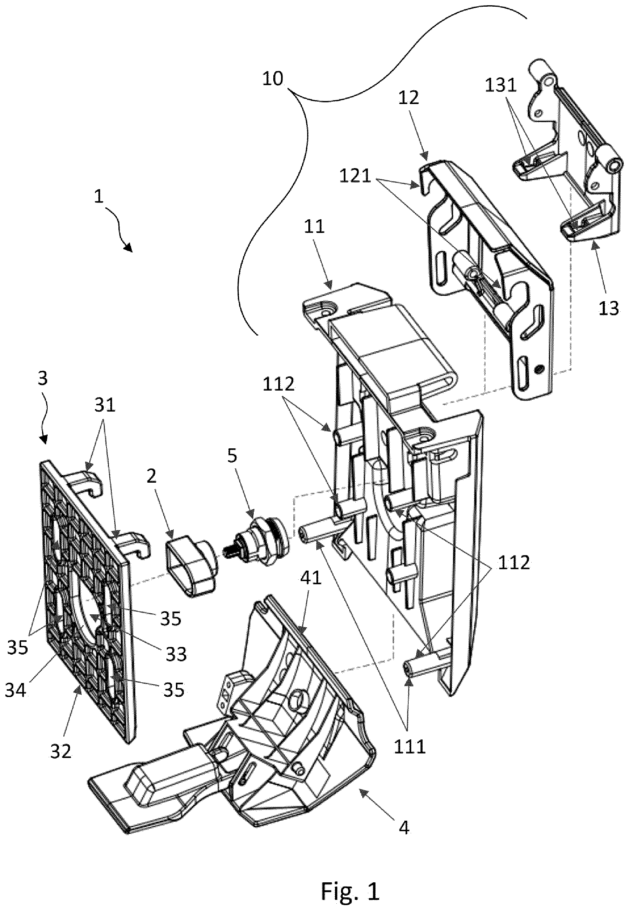

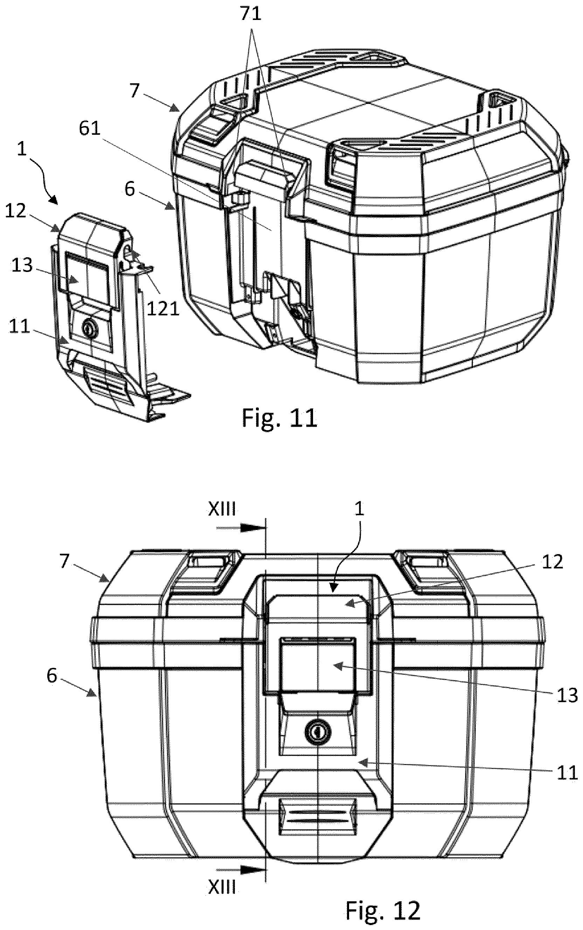

An embodiment of the locking and fastening device (1) of the present invention is described below with reference to figures 1 to 10. Likewise, an embodiment of the motorcycle suitcase of the present invention is also described with reference to figures 11 to 14.

A first aspect of the present invention relates to a locking and fastening device (1) for motorcycle cases. The locking and fastening device (1) comprises a lid closing and opening mechanism (12, 121) for closing and opening a lid (7) of a motorcycle case, a fastening mechanism (4, 41) for removably fasten the motorcycle case to a motorcycle chassis and locking means (2, 3, 5, 11, 13, 31, 32) for locking said lid closing and opening mechanism and said fastening mechanism.

Figure 1 shows an exploded view of the embodiment of the locking and fastening device (1), wherein it can be seen the locking means for locking said lid closing and opening mechanism and said fastening mechanism comprising:
- a lock (5),
- a cam follower mechanism including a cam element (2) and a sliding piece vertically displaceable as a follower element (3),
- two upper latches (31) operationally connected to said follower element (3), and
- a lower latch (32) defined by a lower edge of the follower element (3),

For the embodiment of Figure 1, the locking and fastening device includes a cover set (10) configured to be removably attached to the front face of the motorcycle case and defined by:
- a first cover (11) configured to be removably attached to a part of the motorcycle case,
- a second cover (12) articulately attached to the first cover (11) and configured to be removably attached to the lid (7), and
- a third cover (13) articulately attached to the second cover (12) and provided with two holes (131) arranged to receive the upper latches (31) when the third cover (13) is in a retracted position.

For said disclosed embodiment, the first cover (11) is provided with anchoring means (111) adapted to be anchored to an internal part of the front side of the case (6).

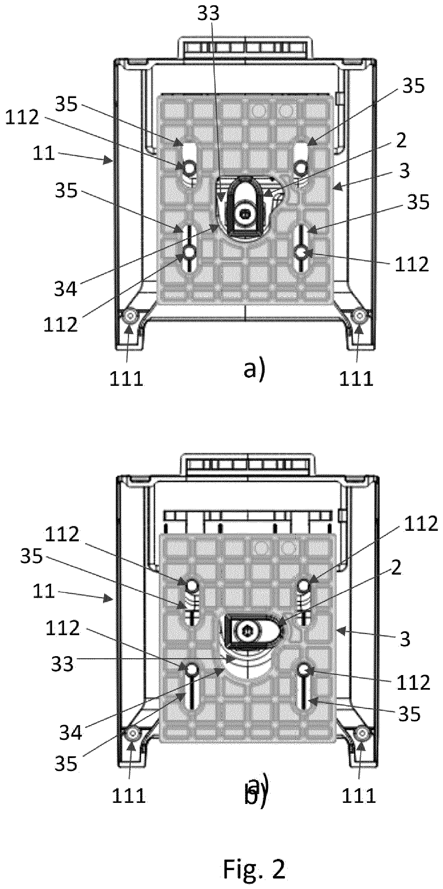

As seen in Fig. 2, the sliding piece as a follower element (3) is provided with a housing (33) configured and arranged to accommodate the cam element (2) such that an inner contour (34) of said housing (33) is in contact with the cam element (2) to be able to convert a reversible rotation of the cam element (2) into a reversible vertical displacement of the sliding piece as a follower element (3). In other words, said cam element (2) is attached to the lock (5) and arranged and configured to convert rotary motion of the lock (5) into reciprocating linear motion of the follower element (3). Therefore, said follower element (3) is configured to allow both said lid closing and opening mechanism and said fastening mechanism to be locked and unlocked upon actuation of the cam follower mechanism by the lock (5).

Advantageously, to guide and limit the movement of the follower element (3) in the vertical direction, the follower element (3) comprises four oblong holes (35) arranged in pairs at two vertical paths, and the first cover (11) comprises four corresponding projections (112) configured to be housed and vertically movable along the oblong holes (35).

For the disclosed embodiment, the fastening mechanism comprises one locking plate (4) provided with an upper flange (41) configured to be retained by said lower latch (32) when the follower element (3) is moved downwardly.

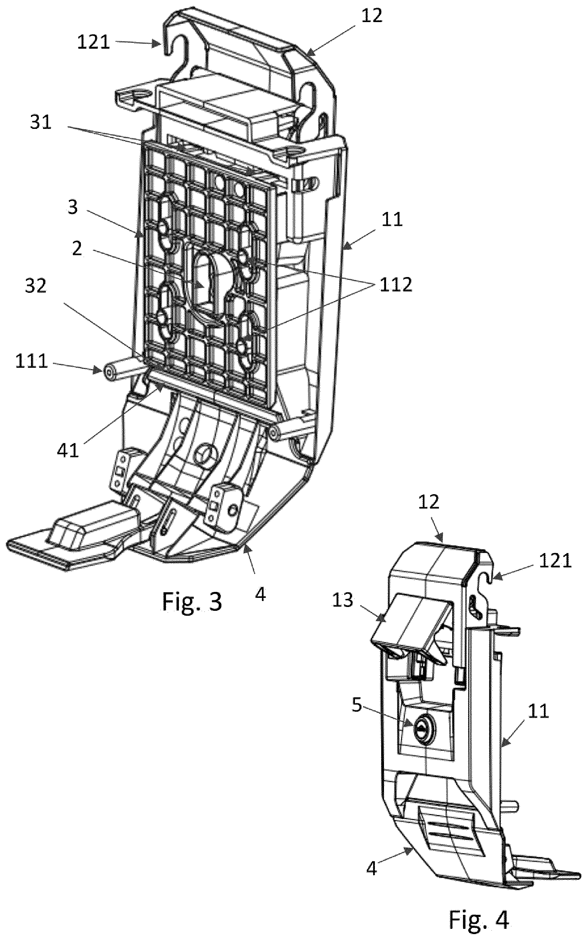

Fig. 3 shows a rear perspective of the locking and fastening device (1), wherein the cam element (2) and the follower element (3) are placed in the first vertical upper position because the lock (5) is placed in its unlocked position, as shown in Fig. 4. So, the third cover (13) may be rotated to an extended position, wherein the lid (7) may be opened, as described later in more detail.

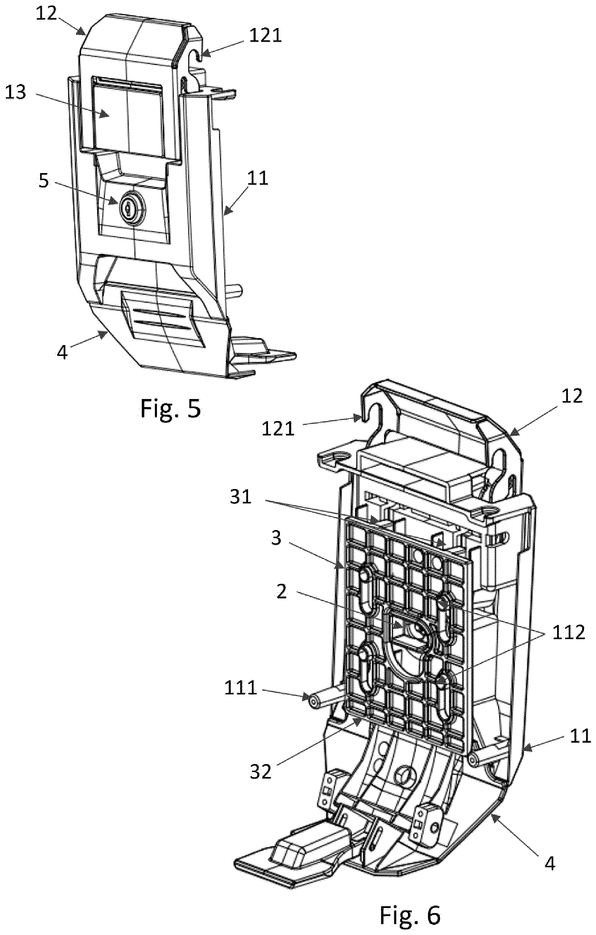

The follower element (3) is mounted vertically displaceable on the cover set (10). So, when the third cover (13) is placed in its retracted or closed position, the upper latches (31) of the sliding piece as follower element (3) are insertable in the holes (131) of the third cover (13) and the second cover (12) is retained attached to the lid (7) of the case. In other words, the third cover (13) is susceptible to be retained by said upper latches (31) and lock the lid opening and closing mechanism upon rotation of the cam element (2), as seen in Fig. 5 and 6.

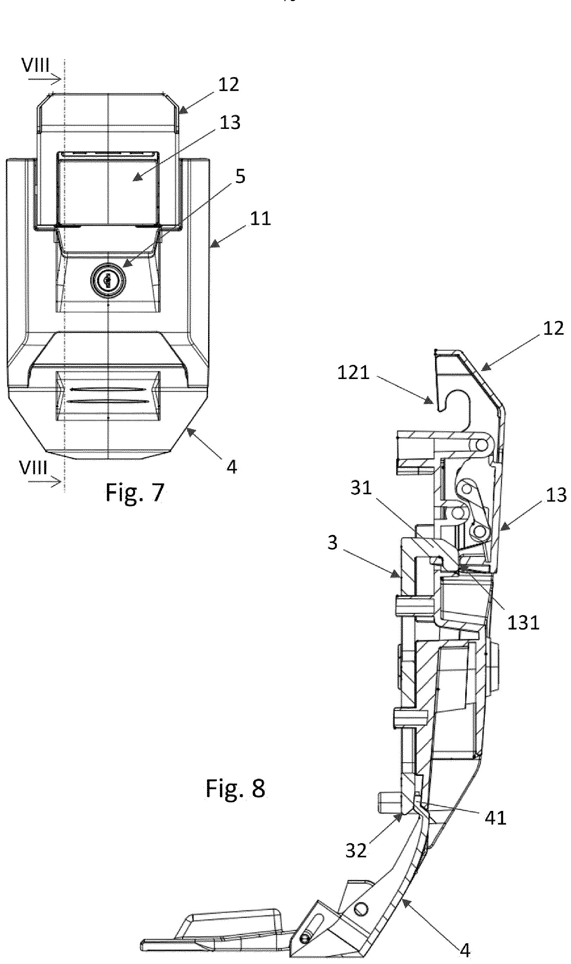

When the follower element (3) is moved downwardly, the lower latch (32) of the sliding piece as follower element (3) overlaps the upper flange (41) of the locking plate (4), so the fastening mechanism is locked keeping the motorcycle case coupled to the coupling elastic means (not shown) disposed at the support structure of the motorcycle (see Fig.8).

As shown in Fig. 8, the upper latches (31) are hook shaped and the third cover (13) is provided with holes (131) arranged to receive the upper latches (31) when the third cover (13) is placed at its retracted position and the sliding piece as follower element (3) is moved downwardly, so the third cover (13) becomes retained by said upper latches (31).

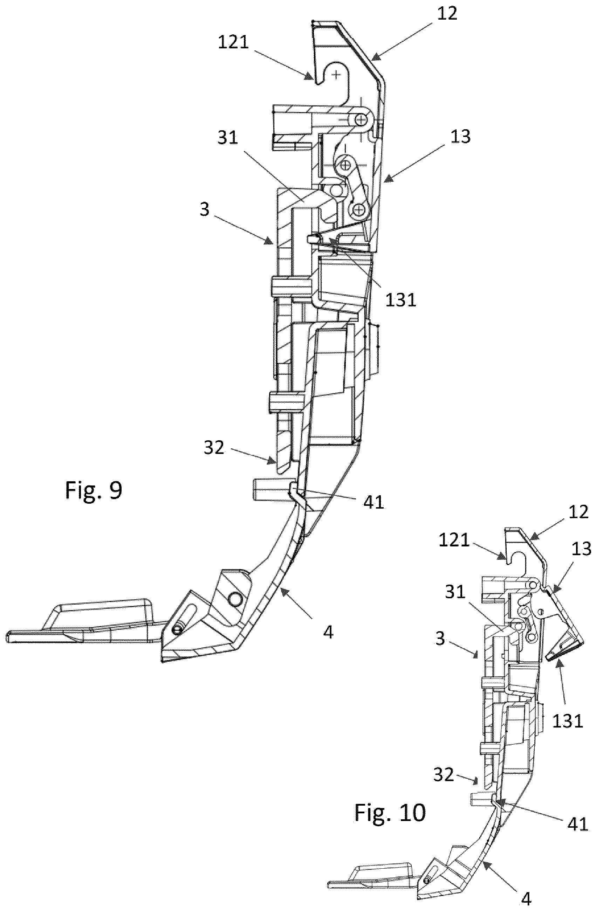

As shown in Fig. 9, the follower element (3) is configured to move upwardly when actuating the lock (5), so the upper latches (31) are extracted from said at least one hole (131), allowing the third cover (13) to rotate to an extended position to be able to unlock the lid opening and closing mechanism, as shown in Fig. 10.

Fig. 11 to 14 show an embodiment of motorcycle case of the present invention. Fig. 11 shows an exploded view wherein it may be seen that the motorcycle case comprises a rigid case (6) and a lid (7) hinged together, and a locking and fastening device (1) according to the described embodiment. The case comprises a recess (61) configured to house said locking and fastening device (1) so that the first cover (11) is flush with the front surface of the motorcycle case, as seen in Fig. 12.

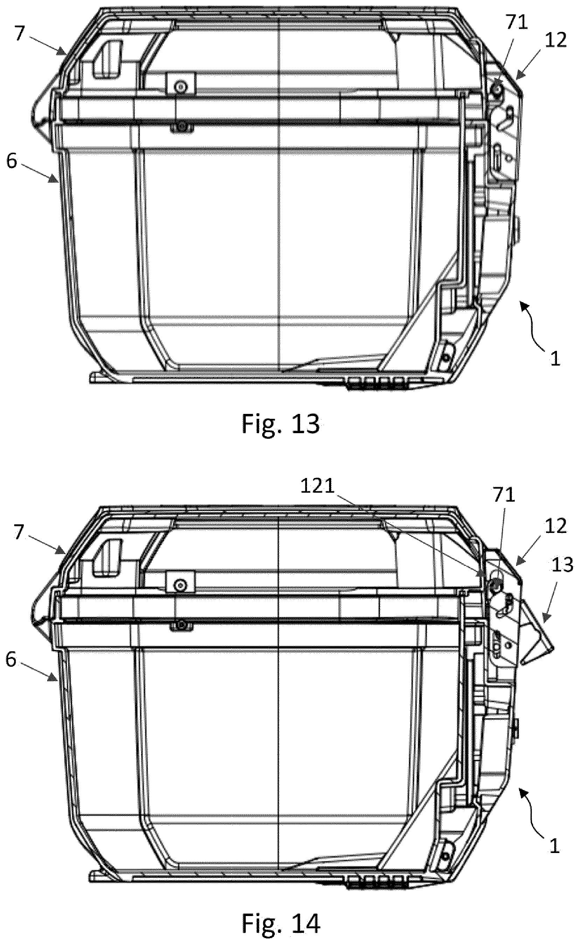

In order to be removably attached to the lid (7), the second cover (12) comprises two lateral hooks (121) configured to be hooked to two corresponding crossbars (71) placed at the lid (7), as shown in Fig. 13 and 14.

When the third cover (13) is placed at the retracted position, the second cover (12) cannot be lifted and remains hooked to the crossbars (71), as shown in Fig. 13. Once the lock (5) is actuated, the third cover (13) may be rotated and the second cover (12) may be lifted, so the lid opening and closing mechanism may be unlocked. The lower latch (32) of the follower element (3) is also moved apart from the upper flange (41) of the locking plate (4) by said follower element (3) moving upwardly (see Fig.10). Consequently, the locking plate (4) of the fastening mechanism may also be released from the coupling elastic means (not shown) of the support structure to be able for the user to release the case from the motorcycle chassis.

Surprisingly, the present invention provides a locking and fastening device that is cost-effective, simpler to manufacture and small. Besides, it may be integrated into the front of the suitcase and combined with a system that fastens the suitcase to the motorcycle.

A person skilled in the art could introduce changes and modifications in the embodiments described above without departing from the scope of the invention as it is defined in the attached claims.

## Claims

1. Locking and fastening device (1) for a motorcycle case, comprising a lid closing and opening mechanism (12, 121) for closing and opening a lid (7) of the motorcycle case, a fastening mechanism (4, 41) for removably fasten the motorcycle case to a motorcycle chassis, and locking means (2, 3, 5, 11, 13, 31, 32) for locking said lid closing and opening mechanism (12, 121) and said fastening mechanism (4, 41), **characterized in that** said locking means comprise:
- at least one latch (31, 32) linked to said lid closing and opening mechanism and said fastening mechanism (4, 41),
- a cam follower mechanism including a cam element (2) and a follower element (3),
- wherein said cam element (2) is mechanically linked to a lock (5) and arranged and configured to convert rotary motion of the lock (5) into reciprocating linear motion of the follower element (3), and
- wherein said follower element (3) is operationally connected to said at least one latch (31, 32) and configured to allow both said lid closing and opening mechanism (12, 121) and said fastening mechanism (4, 41) to be locked and unlocked upon actuation of the cam follower mechanism by the lock (5).

2. Locking and fastening device (1) according to claim 1, wherein the follower element (3) comprises a sliding piece vertically displaceable, wherein said sliding piece is provided with a housing (33) configured and arranged to accommodate the cam element (2) such that an inner contour (34) of said housing (33) is in contact with the cam element (2) to be able to convert a reversible rotation of the cam element (2) into a reversible vertical displacement of the sliding piece.

3. Locking and fastening device (1) according to any of claims 1 to 2, wherein the follower element (3) comprises at least one upper latch (31) linked to the lid closing and opening mechanism (12, 121), and at least one lower latch (32) linked to the fastening mechanism (4, 41), wherein said at least one upper latch (31) and said at least one lower latch (32) are configured to allow said lid closing and opening mechanism (12, 121) and said fastening mechanism (4, 41) to be locked and unlocked upon reversible rotation of the cam follower mechanism by the lock (5).

4. Locking and fastening device (1) according to claims 2 and 3, wherein the upper end of the sliding piece comprises said at least one upper latch (31) and the lower end of the sliding piece comprises said at least one lower latch (32).

5. Locking and fastening device (1) according to any of claims 1 to 4, wherein the cam (2) element is integrally attached to the lock (5).

6. Locking and fastening device (1) according to any of claims 1 to 5, wherein the follower element (3) is mounted vertically displaceable on a cover set (10), the cover set (10) being configured to be removably attached to a side of the motorcycle case.

7. Locking and fastening device (1) according to claim 6, wherein said cover set (10) comprises;
- a first cover (11) configured to be removably attached to a part of the motorcycle case,
- a second cover (12) articulately attached to the first cover (11) and configured to be removably attached to the lid (7), and
- a third cover (13) articulately attached to the second cover (12) and configured to retain the second cover (12) attached to the lid in a retracted third cover position,
- wherein at least one latch (31) is linked to said third cover (13) to be able to retain said third cover (13) in the retracted position.

8. Locking and fastening device (1) according to claims 3 and 7, wherein the third cover (13) is provided with at least one hole (131) arranged to receive the at least one upper latch (31) when the third cover (13) is in a retracted position, so that the third cover (13) is susceptible to be retained by said at least one upper latch (31) to lock the lid opening and closing mechanism (12, 121) upon rotation of the cam follower mechanism by the lock (5).

9. Locking and fastening device (1) according to claim 8, wherein:
- said at least one upper latch (31) is hook-shaped,
- the third cover (13) is configured to rotate and remove said at least one hole (131) reversibly between an extended position of the third cover (13), in which said at least one upper latch (31) is not insertable in said at least one hole (131), and a retracted position of the third cover (13), in which said at least one upper latch (31) is insertable in said at least one hole (131), and
- the follower element (3) is configured to:
• move upwardly when opening the lock (5), so the at least one upper latch (31) is extracted from said at least one hole (131), and
• move downwardly when closing the lock (5), so the at least one upper latch (31) is inserted into said at least one hole (131) when the third cover (13) is placed at the retracted position.

10. Locking and fastening device (1) according to any of claims 1 to 9, wherein the fastening mechanism comprises at least one locking plate (4) provided with at least one upper flange (41) configured to be retained by said at least one latch (32) when the follower element (3) is moved downwardly.

11. Motorcycle case comprising a rigid base (6) and a lid (7), **characterized in that** it comprises a locking and fastening device (1) according to any of the preceding claims.

12. Motorcycle case according to claim 11, wherein it comprises a recess (61) configured to at least partially house said locking and fastening device (1).

13. Motorcycle case according to claim 12, wherein the recess (61) is configured to house the locking and fastening device (1) so that at least the first cover (11) is flush with the front surface of the motorcycle case.
